# EUROPÄISCHE PATENTANMELDUNG

(11) **EP 3 059 038 A1**
(43) Veröffentlichungstag der Anmeldung: **24.08.2016**
(21) Anmeldenummer: 16154020.8
(22) Anmeldetag: 03.02.2016
(51) Int. Cl.: B23D 51/10, B23D 51/00, B25H 3/00

(54) **VORRICHTUNG ZUM EINSETZEN UND ENTNEHMEN EINES SÄGEBLATTS AUS EINER STICHSÄGE UND VERWENDUNG EINER SOLCHEN VORRICHTUNG**

(30) Priorität: 18.02.2015 DE 102015102306
(71) Anmelder: Vorwerk & Co. Interholding GmbH, 42275 Wuppertal (DE)
(72) Erfinder: EHRING, Ingo, 46238 Bottrop (DE); HOFFMANN, Sabrina, 42653 Solingen (DE)
(74) Vertreter: Cohausz & Florack

(57) **Zusammenfassung**

Der Erfindung liegt die Aufgabe zugrunde, eine Vorrichtung für eine elektrische Stichsäge, insbesondere Akku-Stichsäge zu schaffen, mit der bei Entnahme des Sägeblatts aus der Stichsäge sowie beim Sägeblattwechsel ein unmittelbarer Kontakt zwischen Sägeblatt und den Fingern des Benutzers vermieden werden kann. Ferner soll die Vorrichtung eine komfortable Betätigung einer Sägeblattspanneinrichtung (2) einer elektrischen Stichsäge mit Sägeblattauswurf ermöglichen. Erfindungsgemäß wird diese Aufgabe durch eine Vorrichtung (1) gelöst, die eine Schutzabdeckung (3) zur Aufnahme des Sägeblatts (S), mindestens ein Betätigungselement (4) zum Lösen der Sägeblattspanneinrichtung (2) und Klemmelemente (5) zum Halten des Sägeblatts (S) beim Einsetzen desselben in die Sägeblattspanneinrichtung (2) aufweist, wobei die Schutzabdeckung (3), das mindestens eine Betätigungselement (4) und die Klemmelemente (5) miteinander verbunden sind, so dass sie eine Einheit bilden. Insbesondere wird die Verwendung einer solchen Vorrichtung (1) zur Entnahme eines Sägeblatts (S) bzw. zum Sägeblattwechsel bei einer eine Sägeblattspanneinrichtung (2) aufweisenden Stichsäge, beispielsweise einer Stichsäge mit integriertem, nicht ohne weiteres abtrennbarem Akku, beansprucht.

## Beschreibung

Die Erfindung betrifft eine Vorrichtung zum Einsetzen und Entnehmen eines Sägeblatts aus einer motorangetriebenen, eine Sägeblattspanneinrichtung aufweisenden Stichsäge, mit einer Schutzabdeckung zur Aufnahme des Sägeblatts.

Des Weiteren betrifft die Erfindung die Verwendung einer solchen Vorrichtung zur Entnahme eines Sägeblatts bzw. zum Sägeblattwechsel bei einer motorangetriebenen, eine Sägeblattspanneinrichtung aufweisenden Stichsäge, insbesondere wenn die Stichsäge mit einem Akkumulator ausgestattet ist.

Elektrostichsägen sind seit vielen Jahren bekannt. Seit einigen Jahren sind auch sogenannte Akku-Stichsägen im Handel, die mit einer wiederaufladbaren Batterie (Akkumulator) ausgestattet sind.

Das Sägeblatt einer Elektro- bzw. Akku-Stichsäge wird in einer Spanneinrichtung der Stichsäge eingespannt. Zur Entnahme des Sägeblatts aus der Spanneinrichtung sowie zum Einsetzen des Sägeblatts in die gelöste Spanneinrichtung der Stichsäge erfasst der Benutzer das jeweilige Sägeblatt üblicherweise mit seinen Fingern. Um Hand-/Fingerverletzungen durch die Sägezähne des Sägeblatts bei einem versehentlichen Einschalten der Stichsäge zu vermeiden, wird üblicherweise empfohlen, vor der Entnahme bzw. dem Wechsel des Sägeblatts den Netzstecker der Stichsäge aus der Steckdose zu ziehen oder bei einer Akku-Stichsäge den Akku von der Stichsäge zu trennen.

Moderne Elektro- bzw. Akku-Stichsägen weisen ein Sägeblattspannsystem mit einem Sägeblattauswurfmechanismus auf. Das Sägeblattspannsystem enthält hierzu einen Federmechanismus, der beim Einsetzen des Sägeblatts gespannt wird und sich dann beim Lösen des Sägeblattspannsystems schnell entspannen kann, so dass das Sägeblatt aus dem Sägeblattspannsystem ausgeworfen wird. Bei einem solchen Auswurfmechanismus muss das Sägeblatt zur Entnahme aus dem Sägeblattspannsystem zwar vom Benutzer nicht berührt werden, beim Einsetzen des Sägeblatts in das Sägeblattspannsystem ist dies aber normalerweise der Fall und birgt somit die oben erwähnte Verletzungsgefahr.

Bei nicht-motorangetriebenen Handsägen ist es bekannt, die Sägezähne des Sägeblatts bei Nichtgebrauch der Säge mit einer im Querschnitt im Wesentlichen U-förmigen, klemmend aufsteckbaren Schutzleiste abzudecken (vgl. GB 830 747).

Der Erfindung liegt die Aufgabe zugrunde, eine Vorrichtung für eine elektrische Stichsäge, insbesondere Akku-Stichsäge zu schaffen, mit der beim Sägeblattwechsel ein unmittelbarer Kontakt zwischen Sägeblatt und den Fingern des Benutzers vermieden werden kann. Insbesondere soll die Vorrichtung eine komfortable Betätigung einer Sägeblattspanneinrichtung einer elektrischen Stichsäge mit Sägeblattauswurf ermöglichen.

Gelöst wird diese Aufgabe durch eine Vorrichtung mit den in Anspruch 1 angegebenen Merkmalen. Bevorzugte und vorteilhafte Ausgestaltungen der erfindungsgemäßen Vorrichtung sind in den von Anspruch 1 abhängigen Unteransprüchen angegeben.

Die erfindungsgemäße Vorrichtung umfasst eine Schutzabdeckung zur Aufnahme eines Sägeblatts einer motorangetriebenen, eine Sägeblattspanneinrichtung aufweisenden Stichsäge, mindestens ein Betätigungselement zum Lösen der Sägeblattspanneinrichtung und Klemmelemente zum Halten des Sägeblatts beim Einsetzen des Sägeblatts in die Sägeblattspanneinrichtung, wobei die Schutzabdeckung, das mindestens eine Betätigungselement und die Klemmelemente miteinander verbunden sind, so dass sie eine Einheit bilden.

Durch Verwenden der erfindungsgemäßen Vorrichtung wird beim Wechsel eines Sägeblatts einer Elektrostichsäge ein unmittelbarer Kontakt zwischen Sägeblatt und Fingern des Nutzers vermieden. Zugleich ermöglicht die erfindungsgemäße Vorrichtung eine komfortable Betätigung eines Sägeblattauswurfmechanismus einer Sägeblattspanneinrichtung einer elektrischen Stichsäge. Die erfindungsgemäße Vorrichtung bietet einen guten Schutz vor Hand-/Fingerverletzungen beim Sägeblattwechsel, insbesondere bei solchen Akku-Stichsägen, deren Akku nicht einfach von der Stichsäge getrennt werden kann. Auch bietet die erfindungsgemäße Vorrichtung einen Schutz vor Hand-/Fingerverbrennungen bei der Entnahme eines heißen Sägeblatts aus der Stichsäge.

Eine vorteilhafte Ausgestaltung der erfindungsgemäßen Vorrichtung ist dadurch gekennzeichnet, dass die Klemmelemente an einer federelastischen Klammer angeformt oder angebracht sind. Die Ausführung der erfindungsgemäßen Vorrichtung in Form einer federelastischen Klammer ermöglicht die Durchführung der für einen Sägeblattwechsel erforderlichen Schritte mittels einer einfach zu handhabenden Vorrichtung, welche den Nutzer zuverlässig vor Hand-/Fingerverletzungen schützt.

Die Klammer kann hierzu nach einer weiteren bevorzugten Ausgestaltung der Erfindung zwei miteinander federelastisch verbundene Schenkel aufweisen. Vorzugsweise ist dabei jeder der beiden Schenkel an seinem freien Ende mit einem Betätigungselement zum Lösen der Sägeblattspanneinrichtung versehen. Die erfindungsgemäße Vorrichtung bzw. Klammer kann somit nicht nur in einer Stellung, sondern gegebenenfalls beliebig in einer von zwei Stellungen zum Lösen der Sägeblattspanneinrichtung angewandt werden.

Bewährte Sägeblattspanneinrichtungen elektrischer Stichsägen mit Sägeblattauswurffunktion weisen einen oder zwei federbelastete Druckknöpfe oder dergleichen zum Lösen der Sägeblattspanneinrichtung und Auslösen des Sägeblattauswurfs auf. Derartige Sägeblattspanneinrichtungen lassen sich einfach und sicher betätigen, wenn das oder die Betätigungselemente der erfindungsgemäßen Vorrichtung nach einer weiteren bevorzugten Ausgestaltung zahn- oder zapfenförmig ausgebildet sind.

Eine weitere vorteilhafte Ausgestaltung der erfindungsgemäßen Vorrichtung ist dadurch gekennzeichnet, dass die Klemmelemente nocken- oder backenförmig ausgebildet sind. Hierdurch lässt sich ein in die Stichsäge einzusetzendes Sägeblatt mit relativ geringem Kraftaufwand und sicherem Halt einfach handhaben.

Nach einer weiteren vorteilhaften Ausgestaltung der erfindungsgemäßen Vorrichtung ist die Schutzabdeckung zur Aufnahme des Sägeblatts aus lappenförmigen Stegen gebildet, die relativ zueinander, einander überlappend bewegbar/verschiebbar sind. Hierdurch lässt sich ein sehr zuverlässiger Schutz vor Hand-/Fingerverletzungen beim Sägeblattwechsel und zugleich eine besonders einfache Handhabbarkeit der Vorrichtung erreichen.

Für eine einfache Handhabbarkeit der Vorrichtung sieht eine weitere vorteilhafte Ausgestaltung der Erfindung vor, dass das mindestens eine Betätigungselement beim klemmenden Halten des Sägeblatts eine Stellung relativ zu dem Sägeblatt einnimmt, die von dem Sägeblatt weiter beabstandet ist als eine Stellung, bei welcher das Sägeblatt zwischen den Klemmelementen angeordnet ist, jedoch durch die Klemmelemente nicht klemmend berührt wird.

Um die erfindungsgemäße Vorrichtung kostengünstig zu realisieren, werden nach einer weiteren Ausgestaltung die Schutzabdeckung, das mindestens eine Betätigungselement und die Klemmelemente vorzugsweise einteilig ausgebildet und/oder aus Kunststoff hergestellt.

Die vorliegende Erfindung betrifft folglich insbesondere die Verwendung einer Vorrichtung der oben genannten Art zur Entnahme eines Sägeblatts oder zum Sägeblattwechsel bei einer eine Sägeblattspanneinrichtung aufweisenden, motorangetriebenen Stichsäge.

Nachfolgend wird die Erfindung anhand einer mehrere Ausführungsbeispiele darstellenden Zeichnung näher erläutert. Es zeigen:
- Fig. 1: einen Endabschnitt einer Sägeblattspanneinrichtung einer Stichsäge mit eingespanntem Sägeblatt und einer erfindungsgemäßen Vorrichtung zur Entnahme bzw. zum Wechsel des Sägeblatts, in einer Seitenansicht, wobei sich die Vorrichtung in einem unbelasteten Zustand befindet;
- Fig. 2: eine Querschnittansicht der Vorrichtung entlang der Schnittlinie II-II in Fig. 1;
- Fig. 3: eine Querschnittansicht der Vorrichtung entlang der Schnittlinie III-III in Fig. 1; und
- Fig. 4: eine der Fig.1 entsprechende Seitenansicht der Vorrichtung, wobei sich die Vorrichtung hier jedoch in einem druckbelasteten, das Sägeblatt einklemmenden Zustand befindet.

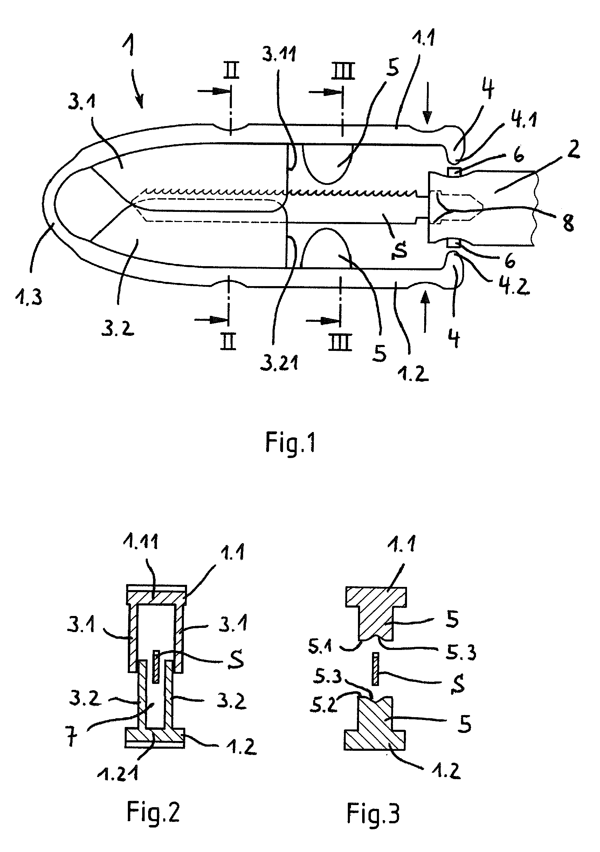

Die in Fig. 1 dargestellte Vorrichtung 1 dient der Entnahme eines Sägeblatts S aus einer motorangetriebenen Stichsäge, zum Beispiel einer Elektro- oder Akku-Stichsäge, die eine Sägeblattspanneinrichtung 2 mit Auswurffunktion aufweist. Die Vorrichtung 1 ist in Form einer federelastischen Klammer ausgebildet. Sie umfasst eine Schutzabdeckung 3 zur Aufnahme des Sägeblatts S, Betätigungselemente 4 zum Lösen der Sägeblattspanneinrichtung 2 und Klemmelemente 5 zum Halten des Sägeblatts S beim Einsetzen desselben in die Sägeblattspanneinrichtung 2.

Die Vorrichtung 1 weist zwei Schenkel 1.1,1.2 auf, die federelastisch miteinander verbunden sind. Die Schenkel 1.1,1.2 sind vorzugsweise einstückig ausgebildet. Jeder der beiden Schenkel 1.1,1.2 ist an seinem Ende mit einem Betätigungselement 4 zum Lösen der Sägeblattspanneinrichtung 2 versehen.

Die Sägeblattspanneinrichtung 2 weist einen Sägeblattauswurfmechanismus auf, der durch Drücken eines oder zweier Entriegelungsstifte oder -knöpfe 6 betätigt werden kann.

Die an der erfindungsgemäßen Vorrichtung 1 zum Betätigen der Entriegelungsstifte oder -knöpfe 6 angeformten oder angebrachten Betätigungselemente 4 sind zahn- oder zapfenförmig ausgebildet. Sie stehen an den Schenkel 1.1, 1.2 innenseitig vor und sind im Wesentlichen fluchtend einander zugewandt.

Die Schutzabdeckung 3 zur Aufnahme des Sägeblatts S ist aus lappenförmigen Stegen 3.1, 3.2 gebildet. Anhand der Figuren 1 und 2 ist zu erkennen, dass an jedem der beiden Schenkel 1.1, 1.2 zwei lappenförmige Stege 3.1, 3.2 angeformt oder angebracht sind. Die Stege 3.1, 3.2 verlaufen im Wesentlichen parallel zueinander. Die Stege 3.1, 3.2 können jedoch in Richtung der Schenkelenden bzw. Betätigungselemente 4 auch leicht divergierend zueinander angeordnet sein, um ein Einführen des freien Endes des Sägeblatts S zu erleichtern.

Die Stege 3.1, 3.2 sind versetzt zueinander angeordnet, so dass die Stege 3.1 des einen Schenkels 1.1 die Stege 3.2 des anderen Schenkels 1.2 überlappen und relativ zueinander, einander überlappend bewegbar bzw. verschiebbar sind. Hierzu sind beispielsweise die Stege 3.1 des einen Schenkels 1.1 weiter voneinander beabstandet als die Stege 3.2 des anderen Schenkels 1.2 (vgl. Fig. 2). Die Stege 3.2 des Schenkels 1.2, die weniger weit voneinander beabstandet sind, sind allerdings so weit voneinander beabstandet, dass in dem von ihnen begrenzten Spalt 7 mit Spiel ein Sägeblatt aufgenommen werden kann. Im unbelasteten Zustand der Vorrichtung (Klammer) 1 überlappen die Stege 3.1 des einen Schenkels 1.1 die Stege 3.2 des anderen Schenkels 1.2 nur mit einem vergleichsweise geringen Maß.

Die Stege 3.1, 3.2 weisen Kantenabschnitte 3.11, 3.21 auf, die den freien Enden der Schenkel 1.1, 1.2 bzw. den Betätigungselementen 4 zugewandt sind und im Wesentlichen senkrecht zu dem sie verbindenden Mittelsteg oder Schenkelabschnitt 1.11 bzw. 1.21 verlaufen.

Die beiden Schenkel 1.1,1.2 sind durch einen federelastischen Klammerabschnitt 1.3 einstückig miteinander verbunden. Der Klammerabschnitt 1.3 weist vorzugsweise eine geringere Wanddicke als andere Abschnitte der Schenkel 1.1, 1.2 auf. Alternativ kann der mit den beiden Schenkeln 1.1, 1.2 einstückig ausgebildete Klammerabschnitt 1.3 durch eine oder mehrere Federn, z.B. eine Schraubenfeder, Spiralfeder oder Schenkelfeder (nicht gezeigt), realisiert sein, wobei die Schenkel 1.1,1.2 dann separat gefertigte Schenkel sind, die an ihrem dem Betätigungselement 4 abgewandten Ende über die Feder oder Federn miteinander verbunden sind.

Die lappenförmigen Stege 3.1, 3.2 enden mit Abstand vor dem Wirkbereich des Verbindungs- bzw. Klammerabschnitts 1.3, durch den die Schenkel 1.1,1.2 federelastisch miteinander verbunden sind. Werden die Schenkel 1.1,1.2 der Klammer 1 im Bereich der Stege 3.1, 3.2 aufeinander zu bewegt, nimmt der Überlappungsbereich der Stege 3.1, 3.2 zu.

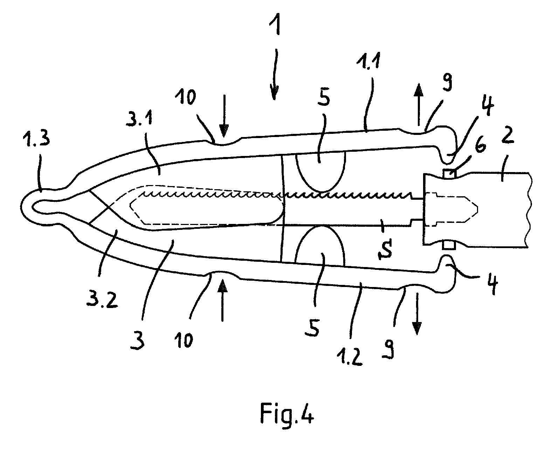

Die Klemmelemente 5 sind nocken- oder backenförmig ausgebildet. Sie sind zwischen der aus den lappenförmigen Stegen 3.1, 3.2 gebildeten Schutzabdeckung 3 und den Betätigungselementen 4 angeordnet. Die Klemmelemente 5 stehen an den Schenkel 1.1,1.2 innenseitig vor und sind fluchtend zueinander angeordnet. Sie sind vorzugsweise einstückig mit dem jeweiligen Schenkel ausgebildet. Beim klemmenden Halten des Sägeblatts S nehmen die Betätigungselemente 4 eine Stellung relativ zu dem Sägeblatt S ein, die von dem Sägeblatt S weiter beabstandet ist als eine Stellung, bei welcher das Sägeblatt S mit Spiel zwischen den Klemmelementen 5 angeordnet ist (vgl. Figuren 1 und 4).

Die einander zugewandten Klemmflächen 5.1, 5.2 der Klemmelemente 5 sind im unbelasteten Zustand der klammerförmigen Vorrichtung 1 deutlich weiter voneinander beabstandet als die einander zugewandten Enden 4.1, 4.2 der zapfenförmigen Betätigungselemente 4 (vgl. Fig.1).

Die einander zugewandten Klemmflächen 5.1, 5.2 der Klemmelemente 5 können im Querschnitt betrachtet eine Vertiefung 5.3, z.B. eine Kerbe, aufweisen, um ein in die Sägeblattspanneinrichtung 2 der Stichsäge einzusetzendes Sägeblatt S besser gegen Verdrehung gesichert halten zu können (vgl. Fig. 3). Unabhängig von solchen Vertiefungen 5.3 wird das einzusetzende Sägeblatt S aber in einem bestimmten Maße auch durch die lappenförmigen Stege 3.1, 3.2 gegen Verdrehung gesichert.

Die erfindungsgemäße Vorrichtung 1 kann beispielsweise als Spritzgießteil aus Kunststoff gefertigt sein. Vorzugsweise sind die Schutzabdeckung 3, die Betätigungselemente 4 und die Klemmelemente 5 einstückig ausgebildet.

Zur Entnahme eines Sägeblatts S aus der Sägeblattspanneinrichtung 2 der Stichsäge wird die klammerartige Vorrichtung 1 über das Sägeblatt S gestülpt, so dass das Sägeblatt S in der durch die lappenförmigen Stege 3.1, 3.2 gebildeten Schutzabdeckung 3 aufgenommen ist. Durch Zusammendrücken der freien Enden der Schenkel 1.1, 1.2 der Klammer werden die zapfenförmigen Betätigungselemente 4 gegen die Entriegelungsstifte oder -knöpfe 6 der Sägeblattspanneinrichtung 2 gedrückt, woraufhin das Sägeblatt S gelöst und in den durch die Schutzabdeckung 3 definierten Aufnahmeraum (Aufnahmespalt 7) "katapultiert" oder geworfen wird. Die den Aufnahmeraum begrenzenden Stege (Lappen) 3.1,3.2 stellen sicher, dass der Nutzer beim Entnehmen des Sägeblatts S aus der Spanneinrichtung 2 der Stichsäge das Sägeblatt S nicht mit seinen Fingern ergreifen muss.

Zum Einsetzen eines Sägeblatts S in die Spanneinrichtung 2 der Stichsäge wird das Sägeblatt S klemmend in der klammerartigen Vorrichtung 1 gehalten, wobei der Nutzer die Schenkel 1.1, 1.2 im Bereich der lappenförmigen Stege 3.1, 3.2 derart zusammendrückt, dass die backenförmigen Klemmelemente 5 klemmend an dem Sägeblatt S anliegen und die freien Enden der Schenkel 1.1,1.2 mit den zapfenförmigen Betätigungselementen 4 auseinanderbewegt werden, so dass das Sägeblatt S in die Spanneinrichtung 2 gesteckt werden kann, ohne dass versehentlich der Auswurfmechanismus der Sägeblattspanneinrichtung 2 ausgelöst wird. Das Sägeblatt S weist an seinem Einsteckende - wie an sich bekannt - einander gegenüberliegende Rastvorsprünge 8 auf.

Die Schenkel 1.1, 1.2 der klammerartigen Vorrichtung 1 können an ihrer Außenseite Markierungen, Oberflächenstrukturen oder muldenförmige Vertiefungen 9,10 aufweisen, die dem Nutzer der Vorrichtung 1 die Stellen anzeigen, an denen er die Schenkel 1.1,1.2 zum Auslösen des Auswurfmechanismus oder zum klemmenden Halten eines Sägeblatts S und Einsetzen desselben in die Spanneinrichtung 2 der Stichsäge vorzugsweise zusammendrücken sollte.

Die erfindungsgemäße klammerartige Vorrichtung 1 kann auch als Aufnahmeetui für ein Sägeblatt S genutzt werden.

Die Ausführung der Erfindung ist nicht auf die in der Zeichnung dargestellten Ausführungsbeispiele beschränkt. Vielmehr sind zahlreiche Varianten denkbar, die auch bei von den dargestellten Beispielen abweichender Gestaltung von der in den beigefügten Ansprüchen angegebenen Erfindung Gebrauch machen.

## Patentansprüche

1. Vorrichtung (1) zum Einsetzen und Entnehmen eines Sägeblatts (S) aus einer motorangetriebenen, eine Sägeblattspanneinrichtung (2) aufweisenden Stichsäge, mit einer Schutzabdeckung (3) zur Aufnahme des Sägeblatts (S), mindestens einem Betätigungselement (4) zum Lösen der Sägeblattspanneinrichtung (2) und Klemmelementen (5) zum Halten des Sägeblatts (S) beim Einsetzen des Sägeblatts (S) in die Sägeblattspanneinrichtung (2), wobei die Schutzabdeckung (3), das mindestens eine Betätigungselement (4) und die Klemmelemente (5) miteinander verbunden sind, so dass sie eine Einheit bilden.

2. Vorrichtung nach Anspruch 1, **dadurch gekennzeichnet, dass** die Klemmelemente (5) an einer federelastischen Klammer angeformt oder angebracht sind.

3. Vorrichtung nach Anspruch 2, **dadurch gekennzeichnet, dass** die Klammer zwei miteinander federelastisch verbundene Schenkel [1.1, 1.2) aufweist.

4. Vorrichtung nach Anspruch 3, **dadurch gekennzeichnet, dass** jeder der beiden Schenkel (1.1, 1.2) an seinem Ende mit einem Betätigungselement (4) zum Lösen der Sägeblattspanneinrichtung (2) versehen ist.

5. Vorrichtung nach einem der Ansprüche 1 bis 4, **dadurch gekennzeichnet, dass** das oder die Betätigungselemente (4) zahn- oder zapfenförmig ausgebildet ist oder sind.

6. Vorrichtung nach einem der Ansprüche 1 bis 5, **dadurch gekennzeichnet, dass** die Klemmelemente (5) nocken- oder backenförmig ausgebildet sind.

7. Vorrichtung nach einem der Ansprüche 1 bis 6, **dadurch gekennzeichnet, dass** die Schutzabdeckung (3) aus lappenförmigen Stegen (3.1, 3.2) gebildet ist, die relativ zueinander, einander überlappend bewegbar sind.

8. Vorrichtung nach einem der Ansprüche 1 bis 7, **dadurch gekennzeichnet, dass** das mindestens eine Betätigungselement (4) beim klemmenden Halten des Sägeblatts (S) eine Stellung relativ zu dem Sägeblatt (S) einnimmt, die von dem Sägeblatt (S) weiter beabstandet ist als eine Stellung, bei welcher das Sägeblatt (S) zwischen den Klemmelementen (5) angeordnet ist, jedoch durch die Klemmelemente (5) nicht klemmend berührt wird.

9. Vorrichtung nach einem der Ansprüche 1 bis 8, **dadurch gekennzeichnet, dass** die Schutzabdeckung (3), das mindestens eine Betätigungselement (4) und die Klemmelemente (5) einteilig ausgebildet und/oder aus Kunststoff hergestellt sind.

10. Verwendung einer Vorrichtung (1) nach einem der Ansprüche 1 bis 9 zur Entnahme eines Sägeblatts (S) oder zum Sägeblattwechsel bei einer motorangetriebenen, eine Sägeblattspanneinrichtung (2) aufweisenden Stichsäge.
